# EUROPÄISCHE PATENTSCHRIFT

(11) **EP 1 014 238 B1**
(45) Veröffentlichungstag und Bekanntmachung des Hinweises auf die Patenterteilung: **06.08.2003**
(21) Anmeldenummer: 98123997.3
(22) Anmeldetag: 17.12.1998
(51) Int. Cl.: G05B 13/02

(54) **Verfahren zur Prozessoptimierung**
Method for process optimisation
Procédé pour l'optimisation d'un processus

(43) Veröffentlichungstag der Anmeldung: 28.06.2000
(73) Patentinhaber: Vechviroon, Thamrat, 51427 Bergisch Gladbach (DE)
(72) Erfinder: Vechviroon, Thamrat, 51427 Bergisch Gladbach (DE)
(74) Vertreter: Lippert, Stachow, Schmidt & Partner

(56) Entgegenhaltungen:
- EP-A- 0 400 789
- K.BRETTHAUER ET AL: "NONLINEAR PROGRAMMING FOR MULTIPERIOD CAPACITY PLANNING IN A MANUFACTURING SYSTEM " EUROPEAN JORNAL OF OPERATIONAL RESEARCH, Bd. 96, Nr. 1, 10. Januar 1997, Seiten 167-179, XP002097752 THE NETHERLANDS
- D.SULE: "MACHINE CAPACITY PLANNING IN GROUP TECHNOLOGY" INTERNATIONAL JOURNAL OF PRODUCTION RESEARCH, Bd. 29, Nr. 9, September 1991, Seiten 1909-1922, XP002097753 UK
- T.WESTERLUND ET AL: "SOLVING A PRODUCTION OPTIMIZATION PROBLEM IN A PAPER-CONVERTING MILL WITH MILP " COMPUTERS CHEMICAL ENGINEERING, Bd. 22, Nr. 4-5, 1998, Seiten 563-570, XP002097754 UK
- B.SARKER ET AL: "AN OPTIMAL BATCH SIZE FOR A PRODUCTION SYSTEM OPERATING UNDER A FIXED-QUANTITY ,PERIODIC DELIVERY POLICY" JOURNAL OF THE OPERATIONAL RESEARCH SOCIETY, Bd. 45, Nr. 7, Juli 1994, Seiten 891-900, XP002097755 UK
- J.WEI ET AL: "AN OPTIMAL MODEL FOR CELL FORMATION DECISIONS" DECISION SCIENCES JOURNAL, Bd. 21, Nr. 2, 1990, Seiten 416-433, XP002097756 USA
- D.LEE ET AL: "ITERATIVE PROCEDURES FOR MULTI-PERIOD OREDER SELECTION AND LOADING PROBLEMS IN FLEXIBLE MANUFACTURING SYSTEMS" INTERNATIONAL JOURNAL FOR PROUCTION RESEARCH, Bd. 36, Nr. 10, Oktober 1998, Seiten 2653-2668, XP002097757 UK

## Beschreibung

Die Erfindung betrifft ein Verfahren zur Steuerung von mehreren parallel und/oder hintereinander arbeitenden Produktionsmaschinen im Rahmen eines gesamten Produktionsprozesses zur Fertigung eines Produktes (B) gemäß einem gegebenen Auftrag, der unter anderem die Anzahl der gewünschten Produkte und den einzuhaltenden Liefertermin vorgibt, bei welchem die gesamten, durch das Verfahren zu minimierenden Rüstkosten (K) der Umstellung für den Auftrag von einer jeweiligen Vorgängermaschine auf eine jeweilige Nachfolgermaschine abhängig sind von n Kostenbestimmungsfaktoren gemäß der Kostenfunktion K = c^{T}x, wobei das hochgestellte T die Transposition der Matrix, c = (c₁, c₂,...,cₙ) die Kostenkoeffizienten für die einzelnen Ressourcen und x = (x₁, x₂,...,xₙ) den Ressourceneinsatz abbilden, und wobei die durch die Maschinen zu leistenden Kapazitäten in einem Register (Kapazitätsregister) abgelegt sind.

Derartige Produktionsplanungs- und Steuerungssysteme sind in verschiedenen Ausführungsformen aus dem Stand der Technik bekannt (siehe z.B. die Druck - Schrift EP 0 400 789). Die wohl zur Zeit gängigsten sind die Systeme MRP (Material Requirement Planning), MRP II und OPT. Diese Systeme versuchen, für einen gegebenen Auftrag unter Berücksichtigung der in Form von linearen Gleichungssystemen dargestellten Kapazitätsbeschränkungen für die verschiedenen Produktionsmaschinen die kostenminimale Fertigung zu ermitteln. Die einzelnen Systeme gehen dabei im Detail unterschiedliche Wege, versuchen aber alle, den Fluß des Produktionsprozesses zu optimieren.

Bei der Berechnung der Produktionskosten gehen die bekannten Systeme von der ceteris paribus-Betrachtung aus, daß die bei dem Umrüsten von einer auftragsbezogenen Vorgängermaschine auf eine auftragsbezogene Nachfolgermaschine entstehenden Rüstkosten fix sind, d. h. diese sind unabhängig von den zu fertigenden Produkten, den für die Fertigung einzusetzenden Werkzeugen, den verwendeten Betriebsmitteln und ähnlichen Determinanten. Diese vereinfachende Annahme ist für die Massenproduktion und Großserienfertigung akzeptabel, da hier die Rüstkosten nur eine untergeordnete Rolle spielen und sich durch die vereinfachende Betrachtung von fixen Rüstkosten im arithmetischen Mittel die Schwankungen in den tatsächlich auftretenden Rüstkosten ausgleichen.

Insbesondere kleine und mittelständische Unternehmen haben sich jedoch vorwiegend auf die kundenorientierte Fertigung spezialisiert, welche sich durch immer kleiner werdende Losgrößen auszeichnet. Bei dieser Fertigungsart, die hier auch als Kleinserienfertigung bezeichnet wird, können diese Rüstkosten nicht vereinfacht als fix betrachtet werden; die Höhe der Rüstkosten hängt von dem jeweiligen Vorprodukt ab. Beispielhaft kann man sich dieses besonders deutlich bei der Pigmentherstellung für Farben verdeutlichen. Zwischen den Produktionsschritten müssen die Produktionsmaschinen bei einem Farbwechsel gereinigt werden, um Verunreinigungen der nächsten Chargen zu verhindern. In Abhängigkeit von der Farbe des Nachprodukts müssen die Aggregate mehr oder weniger intensiv gereinigt werden. unter Umständen muß das gesamte Rührwerkzeug zerlegt werden. Es macht einen erheblichen Unterschied, ob man bei der Fertigung von einem roten auf ein weißes Pigment umstellt oder von einem weißen auf ein schwarzes Pigment. Im zweiten Fall sind die Reinigungskosten, die in diesem Beispiel ein wesentlicher Kostenbestimmungsfaktor für die Rüstkosten sind, deutlich geringer als im ersten Fall.

Derartige Problemstellungen treten beispielsweise auch bei der Fertigung von Kunststoffolien auf. Bei der Fertigung von diesen Folien wird ein granulatartiges Vorprodukt mit verschiedenen Lösungsmitteln versetzt und in einem Extruder bis zur Plastifizierung erhitzt. Das plastifizierte Material tritt aus der Extruderdüse in einen Abkühlbereich für die Folie ein. Die Rüstkosten sind von vielen Determinanten abhängig, so zum Beispiel von der Zusammensetzung des Granulats des Vorprodukts, dem Zusatz von Zusatzstoffen zu dem Granulat sowie der eingesetzten Düse. Es sind zum Beispiel längliche Spaltdüsen für die Fertigung von sich längs erstreckenden Folien oder Ringdüsen mit verschiedenen Durchmessern für die unterschiedlichen Aufträge erforderlich. Die Rüstkosten für den einzelnen Auftrag sind auch hier abhängig von dem Vorprodukt und den im Extruder einzusetzenden Werkzeugen. Je nach Zusammensetzung des Vorproduktes ist eine mehr oder weniger intensive Reinigung der Fertigungsmaschinen notwendig. Besonders günstig ist der Fall, wenn sich das zu fertigende Produkt gar nicht oder nur geringfügig von dem Vorprodukt unterscheidet, da dann geringere Rüstkosten anfallen. Es kann zum Beispiel sein, daß für das zu fertigende Produkt zwar der Rohstoff geändert werden muß, aber dafür dieselbe Düse für das Spritzen der Folie eingesetzt werden kann, so daß für das Wechseln der Düse keine Rüstkosten anfallen.

Daneben haftet den aus dem Stand der Technik bekannten Verfahren der weitere Nachteil an, daß für die einwandfreie Funktion die kapazitativen Beschränkungen der Produktionsmaschinen und die Produktionsfunktionen, welche den Faktorverbrauch der einzusetzenden Güter für die Herstellung eines Produktes angeben, im Detail vorliegen und jeweils auf dem neuesten Stand gehalten werden müssen, um die kostenoptimale Fertigung sicherzustellen. Für kleinere und mittelständische Unternehmen ist die Anschaffung und der Wartungsaufwand eines aus dem Stand der Technik bekannten Systems ökonomisch schwer zu rechtfertigen. Andererseits zwingt der Wettbewerb diese Unternehmen, mögliche Kostensenkungspotentiale zu realisieren, so daß eine Optimierung der Produktionsprozesse notwendig ist.

Schließlich ist mit den aus dem Stand der Technik bekannten System eine Wartung nur in Abhängigkeit der Maschinenlaufzeiten möglich. Auftragsbezogene Unterschiede in der technischen und Produktmäßigen Beanspruchung der Maschinen finden keine Berücksichtigung, so daß die Wartungsintervalle nie optimal anhand der tatsächlichen, auftragsbezogenen Auslastung der Maschinen durchgeführt und geplant werden können.

Der Erfindung liegt deshalb die Aufgabe zugrunde, ein Verfahren zur Steuerung von mehreren parallel und/oder hintereinander arbeitenden Produktionsmaschinen im Rahmen eines gesamten Produktionsprozesses zur Fertigung eines Produktes gemäß einem gegebenen Auftrag zu entwickeln, welches im Vergleich zu den aus dem Stand der Technik bekannten Verfahren von der Datenverarbeitung deutlich einfacher realisierbar ist und deswegen auch in kleinen und mittelständischen Betrieben rentabel implementierbar ist. Daneben soll das Verfahren die Tatsache berücksichtigen, daß die Rüstkosten bei der Kleinserienfertigung nicht fix sind.

Erfindungsgemäß wird diese Aufgabe dadurch gelöst, daß die Rüstkosten für jeden Kostenbestimmungsfaktor in Abhängigkeit von dem jeweiligen Vorprodukt (A) und jedem möglichen Folgeprodukt für jede Maschine in einem Register für Rüstkosten (Rüstkostenregister) abgelegt sind und daß das Verfahren die folgenden Schritte aufweist:
- Prüfen des Kapazitätsregisters nach dem Kriterium, welche Maschinen grundsätzlich für das zu fertigende Produkt (B) im Rahmen des gegebenen Auftrags die erforderliche Kapazität aufweisen,
- Auswählen derjenigen Maschinen im Rüstkostenregister, welche die erforderliche Kapazität für den Auftrag vorsehen können,
- Auswählen derjenigen Maschinen aus den zuvor im Rüstkostenregister, welche als Nachprodukt das zu fertigende Produkt (B) aufweisen, und
- Auswählen derjenigen Maschine aus den zuvor ausgewählten Maschinen im Rüstkostenregister, welche in Abhängigkeit von dem tatsächlich zu fertigenden Vorprodukt die geringsten Rüstkosten aufweist.

Die Grundlage für die Produktionssteuerung bilden das Kapazitäts- und das Rüstkostenregister. In dem Kapazitätsregister sind die für jedes Produkt auf einer bestimmten Produktionsmaschine maximal zu fertigenden Einheiten abgebildet. Das Rüstkostenregister enthält hingegen für jede Maschine die Kosten, die sich durch das Umrüsten von einem beliebigen Vorprodukt auf ein beliebiges Nachfolgeprodukt ergeben. Dabei sind im Rüstkostenregister sämtliche Produktkombinationen eines Unternehmens für alle Maschinen aufgeführt. Für die Erstellung des Rüstkostenregisters kann beispielsweise die in einem Unternehmen vorhandene Betriebsdatenerfassung (BDE) herangezogen werden.

In dem Rüstkostenregister werden also nicht wie beim Stand der Technik die Produktionsfunktionen, sondern die gesamten, für die Umstellung von einem bestimmten Vorprodukt A auf ein zu fertigendes Produkt B (Produktkombination) anfallenden Rüstkosten als skalarer Wert abgebildet. Es bleibt dabei der jeweiligen Entscheidungssituation überlassen, welche Kostenbestimmungsfaktoren in den Wert mit aufgenommen werden. Diese können sich je nach Entscheidungssituation unterscheiden.

Im ersten Schritt des Verfahrens wird das Kapazitätsregister daraufhin überprüft, welche Maschinen theoretisch die Kapazität zur Verfügung stellen können, um den vorgegebenen Auftrag zu fertigen. Das Ergebnis dieses Verfahrensschritt zeigt eine oder mehrere Maschinen auf, die dieses Kriterium erfüllen.

Im nächsten Schritt werden für die zuvor ausgewählten Maschinen diejenigen aus dem Rüstkostenregister herausgezogen, welche bei der Produktkombination im Nachfolgeprodukt das zu fertigende Produkt B enthalten. Als Ergebnis des zweiten Schrittes ergibt sich ein reduziertes Register, welches die auftragsgemäßen Kapazitätsanforderungen B abbildet.

Aus den zuvor ermittelten Maschinen wird in dem letzten Schritt diejenige Maschine ausgewählt, welche die minimalen Rüstkosten aufweist.

Das erfindungsgemäße Verfahren bietet damit gegenüber den aus dem Stand der Technik bekannten Verfahren zur Produktionsplanung und Steuerung deutliche Vorteile. Zum einen wird die erforderliche Rechenleistung reduziert, da zur Ermittlung des optimalen Produktionsprogrammes nicht die gesamten Produktionsabläufe mit den gekoppelten Produktionsfunktionen durchlaufen werden müssen. Diese geringen Anforderungen an die Rechenleistung ermöglichen es, daß das System auch auf herkömmlichen PC's, wie sie sich vorwiegend in kleinen und mittelständischen Unternehmen befinden, ohne große Umrüstung eingesetzt werden kann. Der skalare Wert des Rüstkostenregisters bildet auf einfache Weise die gesamten Rüstkosten ab, welche beispielsweise die Umrüstzeit, den anfallenden Abfall, die Kosten für einen externen Einrichter der Maschinen, die Kosten für Spezialwerkzeuge und die Kosten für die Überprüfung durch einen Experten umfassen.

Besonders gut ist das erfindungsgemäße Verfahren im Rahmen einer Kleinserien- und stark kundenorientierten Fertigung einsetzbar.

Daneben ermöglicht das System erstmals die Durchführung einer auftragsbezogenen Wartung der Maschinen. Bei den aus dem Stand der Technik bekannten Verfahren werden die Wartungsintervalle starr nach den Maschinenlaufzeiten geplant. Dabei wird maschinenspezifisch fest vorgegeben, daß eine Maschine nach x-Stunden gewartet werden muß. Das erfindungsgemäße System ermöglicht dagegen eine kapazitätsorientierte genau vorhersehbar Planung der Wartungsintervalle in Abhängigkeit von der Maschinenlaufleistung für die einzelnen Aufträge. Die Wartungsintervalle sind flexibel dann ansetzbar, wenn es aufgrund der tatsächlichen Auslastung durch die gefertigten Aufträge technisch notwendig erwiesen ist. Da durch das System die Produktion bis ins Detail planbar ist, läßt sich eine einfache auftragsbezogene Wartung durchführen, so daß die Wartungsintervalle je nach Auslastung der Maschine in den Produktionsablauf eingebunden werden können. Das System ersetzt somit die herkömmliche laufleistungbezogene durch eine auftragsbezogene Wartung.

Schließlich gibt das System den Kunden die Möglichkeit, aktiv auf den Produktionsprozeß Einfluß zu nehmen und die Produktionskosten mitzubestimmen. Je eher und konkreter der Kunde seinen Auftrag erteilt, um so genauer und flüssiger kann dieser unter möglichst geringen Umstellungen in den Produktionsablauf integriert werden. Allgemein gilt, daß die Kosten um so geringer sind, je früher geplant wird und je ähnlicher das Vorprodukt und das zu fertigende Produkt sind. Für das Unternehmen wird damit die Kalkulation erleichtert.

In einer bevorzugten Weiterentwicklung des erfindungsgemäßen Verfahrens wird die jeweilige für den vorgegebenen Auftrag ermittelte Maschine für einen Benutzer angezeigt. Dieses kann in einer besonders einfachen Ausführungsform, die auch gut in schmutzigen Produktionsprozessen einsetzbar ist, durch eine Diodenleiste erfolgen. Die verschiedenen Dioden entsprechen den einzelnen, in einer Firma vorhandenen Maschinen. Durch das Aufleuchten einer bestimmten Diode wird festgelegt, welche Maschine für den vorgegebenen Auftrag in Frage kommt. Der Betrachter braucht sich mit keinen weiteren Fragen zu beschäftigen, da durch das Verfahren sichergestellt ist, daß es sich bei der ausgewählten Maschine um die kostenminimale Option handelt.

Günstigerweise werden nach jedem neuen Rüstvorgang die tatsächlich angefallenen Rüstkosten erfaßt und es wird aus diesen Rüstkosten und dem bereits in dem Rüstkostenregister bestehenden Wert ein arithmetisches Mittel gebildet. Auf diese Weise sind in dem Rüstkostenregister immer die neuesten kostenmäßigen Entwicklungen abgebildet.

Zudem kann bei einem Überschreiten eines bestimmten einstellbaren Grenzwertes (Sigmawert) beim Bilden des arithmetischen Mittels für den Betreiber ein Signal ausgegeben werden, welches angibt, an welcher Maschine dieser Grenzwert überschritten wurde. Dies ist ein Hinweis auf einen nicht stabilen Prozeß, der weitere Analysen (Fehlerursachenfindung, Abstellmaßnahmen u. s. w.) notwendig macht. Der Betreiber kann auswählen, ob dieser Wert für die Bildung des neuen arithmetischen Mittels verwendet oder verworfen wird. So wird sichergestellt, daß Werte, die sich aufgrund von unvorhergesehenen externen Determinanten ergeben, nicht in das Rüstkostenregister einfließen.

Bei einer Weiterentwicklung des erfindungsgemäßen Verfahrens werden nur die Kostenbestimmungsfaktoren in dem Rüstkostenregister berücksichtigt, die für 80% der Gesamtkosten verantwortlich sind (Cost-Driver). Im Falle der Fertigung der zuvor genannten Kunststoffolien hat es sich beispielsweise herausgestellt, daß diese Cost-Driver die Abfallkosten und die Umstellkosten sind. Durch die Beschränkung auf die Cost-Driver wird die erforderliche Rechenleistung und vor allen Dingen die für den Betrieb notwendige Datenerfassung zu Beginn des Verfahrens vereinfacht.

Besonders einfach ist es, wenn die Rüstkosten von einer bereits existierenden Betriebsdatenerfassung (BDE) geliefert werden.

Ein Ausführungsbeispiel, bei der das erfindungsgemäße Verfahren für die Produktionssteuerung in der Folienherstellung umgesetzt wird, zeigt die folgende Figur, die ein Flußdiagramm des erfindungsgemäßen Produktionsplanungs- und Steuerungssystems darstellt.

Es wird vorgegeben, einen Auftrag B zu fertigen. Der Auftrag gibt die Menge der zu fertigenden Folie und den Liefertermin vor. Dieser Auftrag kann grundsätzlich auf 9 verschiedenen Maschinen gefertigt werden, die zum Zeitpunkt des Auftragseingangs andere Aufträge fertigen oder stillstehen.

Zunächst wird das Kapazitätsregister 2 danach überprüft, welche von den vorhandenen Maschinen grundsätzlich für das zu fertigende Produkt B im Rahmen des gegebenen Auftrags die erforderliche Kapazität aufweisen (Zeitcheck). Als Ergebnis 1 ergeben sich diejenigen Maschinen, die dieses Kriterium erfüllen. Das Ergebnis 1 wird in einem Zwischenregister 3 abgelegt.

Aus dem Zwischenregister 3 werden unter Zusammenschau mit dem Rüstkostenregister 4 diejenigen Maschinen ausgewählt, welche als Nachprodukt das zu fertigende Produkt B aufweisen. Dieses Ergebnis 2 wird in dem Zwischenregister 5 abgelegt.

Aus dem Zwischenregister 5 wird schließlich diejenige Maschine ausgewählt, welche in Abhängigkeit von dem tatsächlich zu fertigenden Vorprodukt die geringsten Rüstkosten aufweist. Das Endergebnis 6 liefert die für den Auftrag unter den momentanen Aspekten kostengünstigste Produktionsmaschine. Diese Maschine wird anhand der Leuchtdioden 7 dargestellt.

Das erfindungsgemäße Verfahren ist nicht auf die beschriebene Ausführungsform beschränkt, sondern kann auch anderweitig realisiert werden. Besonders hervorzuheben ist, daß das erfindungsgemäße Verfahren eine Zusagegenauigkeit bei der Produktionsplanung von bis zur 98 Prozent ermöglicht.

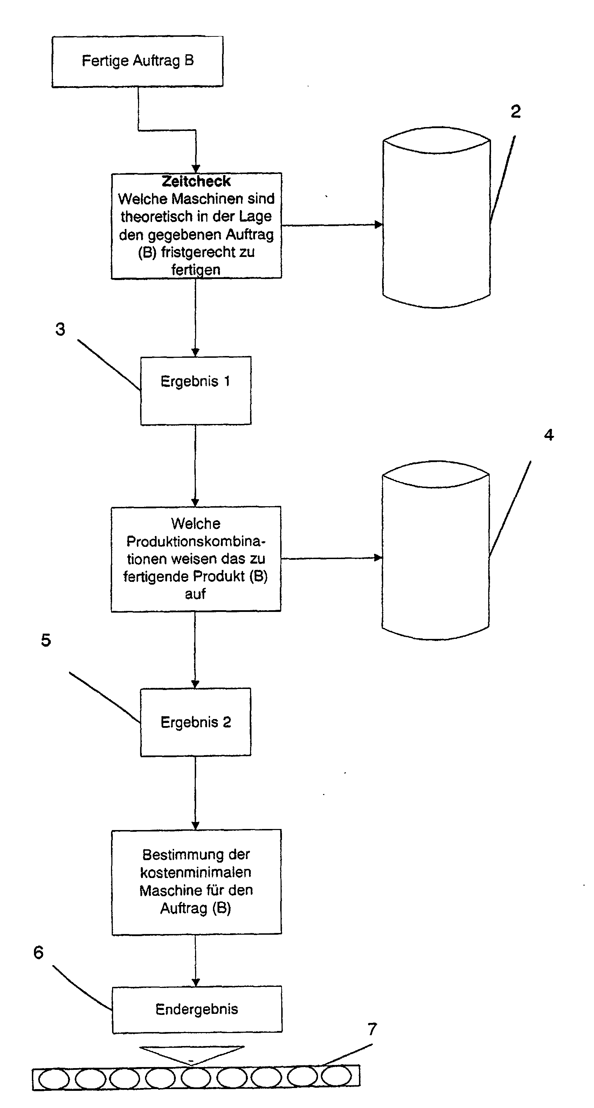

## Patentansprüche

1. Verfahren zur Steuerung von mehreren parallel und/oder hintereinander arbeitenden Produktionsmaschinen im Rahmen eines gesamten Produktionsprozesses zur Fertigung eines Produktes (B) gemäß eines gegebenen Auftrags, der unter anderem die Anzahl der gewünschten Produkte und den einzuhaltenden Liefertermin vorgibt, bei welchem die gesamten, durch das Verfahren zu minimierenden Rüstkosten (K) der Umstellung für den Auftrag von einer jeweiligen Vorgängermaschine auf eine jeweilige Nachfolgermaschine abhängig sind von n Kostenbestimmungsfaktoren gemäß der Kostenfunktion K = c^{T}x, wobei das hochgestellte T die Transposition der Matrix, c = (c₁, c₂,...,cₙ) die Kostenkoeffizienten für die einzelnen Ressourcen und x = (x₁, x₂,...,xₙ) den Ressourceneinsatz darstellen, und wobei die Kapazitäten der Maschinen in einem Register (Kapazitätsregister) abgelegt sind, **dadurch gekennzeichnet,** daß die Rüstkosten für jeden Kostenbestimmungsfaktor in Abhängigkeit von dem jeweiligen Vorprodukt (A) und jedem möglichen Folgeprodukt für jede Maschine in einem Register für Rüstkosten (Rüstkostenregister) abgelegt sind und daß das Verfahren die folgenden Schritte aufweist:
- Prüfen des Kapazitätsregisters nach dem Kriterium, welche Maschinen grundsätzlich für das zu fertigende Produkt (B) im Rahmen des gegebenen Auftrags die erforderliche Kapazität aufweisen,
- Auswählen derjenigen Maschinen im Rüstkostenregister, welche die erforderliche Kapazität für den Auftrag vorsehen können,
- Auswählen derjenigen Maschinen aus den zuvor ausgewählten Maschinen im Rüstkostenregister, welche als Nachprodukt das zu fertigende Produkt (B) aufweisen, und
- Auswählen derjenigen Maschine aus den zuvor ausgewählten Maschinen im Rüstkostenregister, welche in Abhängigkeit von dem tatsächlich zu fertigenden Vorprodukt die geringsten Rüstkosten aufweist.

2. Verfahren nach Anspruch 1, **dadurch gekennzeichnet, daß** die für den vorgegebenen Auftrag ermittelte Maschine für einen Benutzer angezeigt wird.

3. Verfahren nach Anspruch 1 oder 2, **dadurch gekennzeichnet, daß** dieses im Rahmen einer Kleinserienfertigung und stark kundenorientierten Fertigung eingesetzt wird.

4. Verfahren nach einem der Ansprüche 1 bis 3, **dadurch gekennzeichnet, daß** die jeweiligen Rüstkosten bei jedem Rüsten erfaßt werden, aus diesen Rüstkosten und den bereits in dem Rüstkostenregister bestehenden Kosten das arithmetische Mittel gebildet wird und dieses arithmetische Mittel als neuer Wert in dem Rüstkostenregister abgelegt wird.

5. Verfahren nach Anspruch 4, **dadurch gekennzeichnet, daß** beim Überschreiten eines bestimmten und einstellbaren Grenzwertes (Sigma - Wert) beim Bilden des arithmetischen Mittels für den Betreiber ein Signal gegeben wird, welches angibt, an welcher Maschine dieser Grenzwert überschritten wurde und daß der Betreiber auswählen kann, ob dieser Wert für die Bildung des neuen arithmetischen Mittels verwendet oder verworfen wird.

6. Verfahren nach einem der Ansprüche 1 bis 5, **dadurch gekennzeichnet, daß** die Rüstkosten von der Betriebsdatenerfassung (BDE) geliefert werden.

7. Verfahren nach einem der Ansprüche 1 bis 6, **dadurch gekennzeichnet, daß** nur die wesentlichen Kostenbestimmungsfaktoren (Cost Driver), die etwa 80 Prozent der Gesamtkosten verursachen, in dem Rüstkostenregister abgespeichert und verarbeitet werden.

## Claims

1. Method for controlling a plurality of production machines, which function in parallel and/or in series, in an entire production process for producing a product (B) according to a given order which specifies *inter alia* the number of desired products and the delivery date to be complied with, wherein the total set-up costs (K), which are to be minimised by the method, of changing over for the order from one preceding machine to a subsequent machine are dependent on n cost-determining factors according to the cost function K = c^{T}x, where the superscript T represents the transposition of the matrix, c = (c₁, c₂,..., cₙ) represents the cost coefficients for the individual resources and x = (x₁, x₂,..., xₙ) represents the use of resources, and wherein the capacities of the machines are stored in a register (capacity register), **characterised in that** the set-up costs for each cost-determining factor in accordance with the respective initial product (A) and each possible subsequent product for each machine are stored in a register for set-up costs (set-up cost register), and **in that** the method has the following steps:
- checking of the capacity register according to the criterion as to which machines in principle have the necessary capacity for the product (B) to be produced within the scope of the order given,
- selection of those machines in the set-up cost register which can provide the necessary capacity for the order,
- selection of those machines from the previously selected machines in the set-up cost register which have the product (B) to be produced as an afterproduct, and
- selection of the machine from the previously selected machines in the set-up cost register that has the lowest set-up costs in accordance with the initial product actually to be produced.

2. Method according to claim 1, **characterised in that** the machine determined for the given order is indicated for a user.

3. Method according to claim 1 or 2, **characterised in that** the method is used in small lot production and heavily customer-orientated production.

4. Method according to any one of claims 1 to 3, **characterised in that** the set-up costs for each set-up operation are established, the arithmetic mean is produced from those set-up costs and the costs already present in the set-up cost register and this arithmetic mean is stored as a new value in the set-up cost register.

5. Method according to claim 4, **characterised in that**, if a given and adjustable limit value (sigma value) is exceeded when the arithmetic mean is produced, a signal is output for the operator and indicates the machine at which this limit value was exceeded, and **in that** the operator can select whether this value is used or rejected for the production of the new arithmetic mean.

6. Method according to any one of claims 1 to 5, **characterised in that** the set-up costs are supplied by the production data acquisition (PDA) system.

7. Method according to any one of claims 1 to 6, **characterised in that** only the significant cost-determining factors (cost drivers) which cause approximately 80% of the total costs are stored and processed in the set-up cost register.

## Revendications

1. Procédé pour la commande de plusieurs machines de production travaillant en parallèle et/ou l'une derrière l'autre dans le cadre d'un processus de production global pour la fabrication d'un produit (B) selon une commande donnée qui prédéfinit, entre autres, le nombre de produits souhaités et le délai de livraison à respecter, dans lequel les coûts totaux de réglage (K) à minimiser grâce au procédé pour la conversion pour la commande d'une machine précédente respective à une machine suivante respective, dépendent de n facteurs de détermination des coûts suivant la fonction de coûts K = c^{T}x, le T placé en exposant représentant la transposition de la matrice, c = (c₁, c₂, .....cₙ) les coefficients de coûts pour les ressources individuelles et x = (x₁, x₂,....,xₙ) l'utilisation des ressources et les capacités des machines étant placées dans un registre (registre de capacité), **caractérisé en ce que** les coûts de réglage pour chaque facteur de détermination des coûts sont placés dans un registre pour coûts de réglage (registre de coûts de réglage) en fonction du produit respectif précédent (A) et de chaque produit possible suivant pour chaque machine et **en ce que** le procédé comporte les étapes suivantes :
- vérification du registre de capacité d'après le critère déterminant quelles machines présentent fondamentalement la capacité nécessaire pour le produit à fabriquer (B) dans le cadre de la commande passée,
- sélection, dans le registre de coûts de réglage, des machines qui peuvent prévoir la capacité nécessaire pour la commande,
- sélection, dans le registre de coûts de réglage, des machines parmi les machines sélectionnées précédemment qui comportent le produit à fabriquer (B) comme produit suivant, et
- sélection, dans le registre de coûts de réglage, de la machine parmi les machines sélectionnées précédemment qui présente les coûts les plus faibles en fonction du produit précédent à fabriquer effectivement.

2. Procédé selon la revendication 1, **caractérisé en ce que** la machine déterminée pour une commande prédéterminée est affichée pour un utilisateur.

3. Procédé selon la revendication 1 ou 2, **caractérisé en ce que** celui-ci est utilisé dans le cadre d'une fabrication en petites séries et d'une fabrication fortement orientée clients.

4. Procédé selon l'une quelconque des revendications 1 à 3, **caractérisé en ce que** les coûts de réglage respectifs sont saisis à chaque réglage, la moyenne arithmétique est établie à partir de ces coûts de réglage et des coûts déjà présents dans le registre de coûts de réglage et cette moyenne arithmétique est placée dans le registre de coûts de réglage comme nouvelle valeur.

5. Procédé selon la revendication 4, **caractérisé en ce que**, en cas de dépassement d'une valeur limite déterminée et réglable (valeur sigma) lors de l'établissement de la moyenne arithmétique, un signal est envoyé à l'utilisateur, qui précise sur quelle machine cette valeur limite a été dépassée et qui indique que l'utilisateur peut choisir si cette valeur sera utilisée pour l'établissement de la nouvelle moyenne arithmétique ou sera éliminée.

6. Procédé selon l'une quelconque des revendications 1 à 5, **caractérisé en ce que** les coûts de .réglage sont fournis par la saisie des données d'exploitation (BDE).

7. Procédé selon l'une quelconque des revendications 1 à 6, **caractérisé en ce que** seuls les facteurs de détermination des coûts importants (cost driver) , qui occasionnent environ 80 pour cent des coûts globaux, sont mémorisés et traités dans le registre des coûts de réglage.
